# EUROPEAN PATENT SPECIFICATION

(11) **EP 3 430 233 B1**
(45) Date of publication and mention of the grant of the patent: **24.07.2024**
(21) Application number: 16895645.6
(22) Date of filing: 19.03.2016
(51) Int. Cl.: E21B 43/013, E21B 17/01, E21B 33/038, E21B 33/043, F16L 35/00, F16L 19/00

(54) **SUBSEA CLAMP TENSIONING SYSTEM**
UNTERWASSERKLEMMENSPANNSYSTEM
SYSTÈME DE TENSION DE BRIDE SOUS-MARINE

(43) Date of publication of application: 23.01.2019
(73) Proprietor: Oceaneering International, Inc., Houston, TX 77086 (US)
(72) Inventor: RICE, Kenneth Lane, Austin Texas 78757 (US)
(74) Representative: Potter, Julian Mark
(86) International application number: PCT/US2016/023321
(87) International publication number: WO 2017/164834

(56) References cited:
- US-A- 2 265 786
- US-A- 3 231 297
- US-A- 4 989 450
- US-A- 5 471 739
- US-A- 5 671 812
- US-A- 6 003 548
- US-B1- 6 880 412
- US-B1- 7 658 131
- US-B2- 7 757 366

## Description

### RELATION TO PRIOR APPLICATIONS

This application claims the benefit of, and priority through, United States Provisional Application 62/135,947, titled "Subsea Clamp Tensioning System," filed March 20, 2015.

### BACKGROUND

Tensioner systems are known in the art but hazards of using them include a buildup of unpredictably frictional loads created by thread and sliding frictions in the torqueing process. Standard torque systems lack predictability of gasket pre-load to input closure (tensioning and torqueing).

### FIGURES

Various figures are included herein which illustrate the disclosed invention.
**Fig. 1** is a view in partial perspective of an exemplary subsea clamp tensioning system disposed about a tubular;
**Fig. 2** is a cut-away view in partial perspective of an exemplary subsea clamp tensioning system disposed about a tubular;
**Fig. 3** is a cut-away side view in partial perspective of an exemplary subsea clamp tensioning system disposed about a tubular; and
**Fig. 4** is a cut-away view in partial perspective of an exemplary subsea clamp tensioning system illustrating tension grips disposed within a tension grip holder.

### DESCRIPTION OF EXEMPLARY EMBODIMENTS

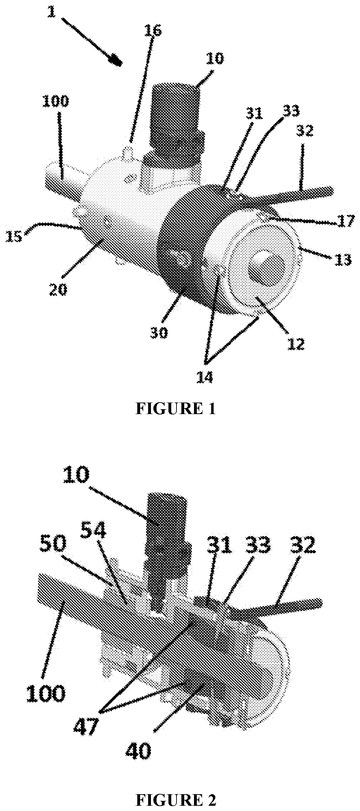

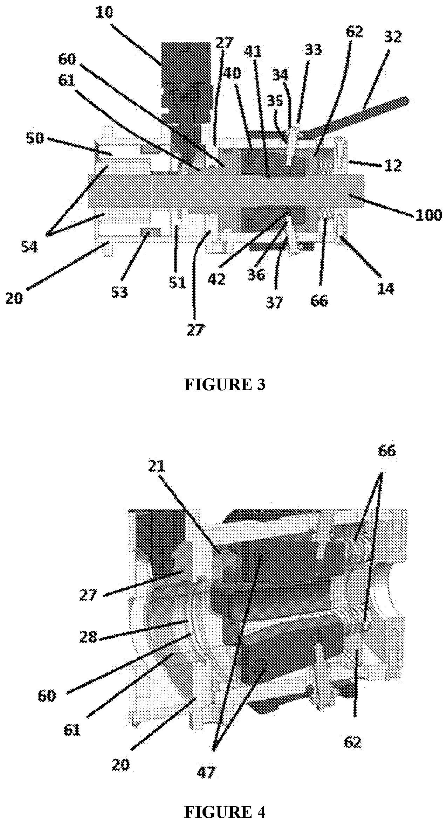

Referring to **Figs. 1** and **3****,** generally, as discussed below, there are two hubs (not shown in the figures), one on a side of subsea clamp tensioning system 1 towards an outboard device such as a tree, manifold, or PLET, and one on a connector. Subsea clamp tensioning system 1 holds the two hubs together, typically with a metal seal installed between them to prevent leakage. The hubs typically have multiple features for sealing, alignment, and interaction with subsea clamp tensioning system 1. As illustrated in the figures, a portion of tubular 100 may be threaded.

Subsea clamp tensioning system 1 comprises housing 20; collar 30 dimensioned to fit about housing 20, where collar 30 comprises a plurality of offset channels 31; a set of adjusters 33 **(****Fig. 3****)** corresponding to the plurality of offset channels 31; collar handle 32; a plurality of tension grips 40 **(****Fig. 3****)** movingly disposed within interior void 21 **(****Fig. 4****),** the plurality of tension grips 40 defining a tension grip channel 41 **(****Fig. 3****);** subsea hydraulic motor 10; and nut runner 50 **(****Fig. 3****)** disposed within a portion of interior void 21 and dimensioned to accept and engage tubular 100, where nut runner 50 is operatively in communication with subsea hydraulic motor 10 and dimensioned to accept tubular 100 therethrough. Typically, there is one adjuster 33 and one offset channel 31 for each tension grip 40.

Housing 20 typically comprises interior void 21 **(****Fig. 4****)** dimensioned to accept tubular 100 therethrough, first end 15, and second end 13 disposed opposite first end 15. One or more receivers 17 may be present at either first end 15 or second end 13, each receiver 17 dimensioned to receive a corresponding guide 16 and/or fastener 14.

Tension grip stop 12 may be disposed proximate second housing end 13 and may further be disposed at least partially within interior void 21 **(****Fig. 4****).** Tension grip stop 12 comprises a port dimensioned to allow a portion of tubular 100 to go through tension grip stop 12.

Referring more to **Fig. 3****,** each adjuster 33 typically comprises upper portion 34 configured to be larger in a dimension than its corresponding offset channel 31 **(****Fig. 1****)** such that offset channel 31 prohibits travel of upper portion 34 into interior void 21 **(****Fig. 4****).** Each adjuster 33 further typically comprises middle portion 35 connected to upper portion 34 which is dimensioned to travel into interior void 21 and lower portion 36 connected to middle portion 34, where lower portion 36 is engagable with its associated tension grip 40. Each adjuster also typically comprises one or more springs 37 disposed about a predetermined length of middle portion 35. Upper portion 34, middle portion 35, and lower portion 36 are contiguous.

Although tension grip 40 may comprise any appropriate shape, it typically comprises a substantially trapezoidally shaped tension grip.

Nut runner 50 may further comprise one or more gears 51, typically a bevel gear, which is operatively in communication with subsea hydraulic motor 10. Nut runner 50 typically comprises nut 54, operatively connected to subsea hydraulic motor 10, and preferably further comprises grooves dimensioned to cooperatively engage with corresponding threads in tubular 100. Nut 54 is typically rotationally disposed within nut runner 50.

One or more seals 53 may disposed within housing interior void 21 and be operatively in occlusive communication with nut runner 50.

Referring additionally to **Fig. 4****,** tension grip housing 60 **(****Fig. 3****)** is disposed at least partially within interior void 21 and each tension grip 40 movingly, e.g. pivotally at pivot 47, disposed within tension grip housing 60 at an end of tension grip 40 closest to first end 15. Interior void 21 may further comprise housing wall 27 disposed intermediate first end 15 and second end 13, where housing wall 27 comprises housing wall port 28 sufficiently sized to accept tubular 100 **(****Fig. 1****)** therethrough. Tension grip housing 60 may then comprise first end 61 dimensioned to partially fit through housing wall port 28; second end 62 disposed opposite first end 61, where second end 62 defines a tension grip housing stop; and one or more stop springs 66 disposed between tension grip stop 12 and second end 62.

**In the operation of an exemplary method,** subsea clamp tensioning system 1 is positioned about tubular 100, where subsea clamp tensioning system 1 is as described above. Using the set of adjusters 33 **(****Fig. 3****),** the plurality of tension grips 40 may be advanced against tubular 100 by pulling each of the adjusters 33 as opposed to turning them to create a desired tension.

A nut spinning function of subsea clamp tensioning system 1 may be automated by having collar handle 32 utilize subsea hydraulic motor 10 to draw two clamp sections together around the hubs (not shown in the figures) after a set of connection tools (not shown in the figures) have brought the hubs face-to-face. The two subsea clamp tensioning systems 1 may be aligned during this process using receivers 17 and corresponding guides 16 and their opposing ends secured using tension grip stops 12.

As subsea clamp tensioning system 1 is activated, nut runner 50 is allowed to continue to spin nut 54 to mechanically lock subsea clamp tensioning system 1 such as by engaging and advancing threads on tubular 100. Typically, final clamp tension is created by making up tension via the built-in hydraulic piston load to create the desired gasket pre-load.

Further, collar handle 32 is typically allowed to snug adjusters 33 as subsea clamp tensioning system 1 is activated, e.g. by using adjusters 33 to advance one or more tension grips 40 against tubular 100.

Once the operation is completed and tested, subsea clamp tensioning system 1 may be removed. It may also then be mounted onto a connector tool for retrieval to the surface.

The foregoing disclosure and description is illustrative and explanatory. Various changes in the size, shape, and materials, as well as in the details of the illustrative construction and/or an illustrative method may be made, as long as these changes are within the scope of the appended claims.

## Claims

1. A subsea clamp tensioning system, comprising:
a. a housing (20) comprising:
i. an interior void (21) dimensioned to accept a tubular (100) therethrough;
ii. a first end (15); and
iii. a second end (13) disposed opposite the first end;
b. a collar (30) dimensioned to fit about the housing, the collar comprising a plurality of offset channels (31);
c. a plurality of tension grips (40) movingly disposed within the interior void and configured to advance against the tubular (100) to create a desired tension, the tension grips defining a tension grip channel (41), each tension grip defining a portion of the tension grip channel;
d. a set of adjusters (33) corresponding to the plurality of offset channels, each adjuster comprising:
i. an upper portion (34) configured to be larger in a dimension than the offset channel such that the offset channel prohibits travel of the upper portion into the interior void;
ii. a middle portion (35) connected to the upper portion and dimensioned to travel through the offset channel into the interior void;
iii. a lower portion (36) connected to the middle portion, the lower portion engagable with the tension grip; and
iv. a spring (37) disposed about a predetermined length of the middle portion;
e. a subsea hydraulic motor (10); and
f. a nut runner (50) disposed within a portion of the interior void (21) and dimensioned to accept and engage the tubular, the nut runner (50) operatively in communication with the subsea hydraulic motor (10), the nut runner (50) dimensioned to accept the tubular therethrough.

2. The subsea clamp tensioning system of Claim 1, further comprising a tension grip stop (12) disposed proximate the second housing end (13).

3. The subsea clamp tensioning system of Claim 2, wherein the tension grip stop (12) is disposed at least partially within the interior void.

4. The subsea clamp tensioning system of Claim 1, wherein each tension grip (40) further comprises a substantially trapezoidally shaped tension grip (40).

5. The subsea clamp tensioning system of Claim 1, wherein each of the plurality of offset channels (31) is associated with a tension grip (40) of the plurality of tension grips (40).

6. The subsea clamp tensioning system of Claim 1, further comprising a tension grip housing (60) disposed at least partially within the interior void (21), each tension grip (40) pivotally mounted within the tension grip housing (60) at an end of the tension grip closest to the first end (15) of the housing (60).

7. The subsea clamp tensioning system of Claim 6, wherein:
a. the interior void (21) further comprises a housing wall (27) disposed intermediate the first end (15) and the second end (13), the housing wall comprising a housing wall port (28); and
b. the tension grip housing (60) further comprises:
i. a first end (61) dimensioned to partially fit through the housing wall port (28);
ii. a second end (62) disposed opposite the first end, the second end defining a tension grip housing stop; and
iii. a stop spring (66) disposed between the tension grip stop (12) and the tension grip housing stop.

8. The subsea clamp tensioning system of Claim 7, wherein the nut runner (50) further comprises a gear (51) operatively in communication with the subsea hydraulic motor (10).

9. The subsea clamp tensioning system of Claim 8, wherein the gear further comprises a bevel gear.

10. The subsea clamp tensioning system of Claim 8, further comprising a seal (53) disposed within the housing interior void (21) and operatively in occlusive communication with the nut runner (50).

11. The subsea clamp tensioning system of Claim 1, wherein the nut runner (50) further comprises a nut (54) operatively connected to the subsea hydraulic motor.

12. The subsea clamp tensioning system of Claim 11, wherein:
a. the tubular comprises threads; and
b the nut (54) further comprises a grooved nut runner (50) dimensioned to cooperatively engage with corresponding threads in the tubular.

13. The subsea clamp tensioning system of Claim 11, wherein the nut (54) is rotationally disposed within the nut runner (50).

## Patentansprüche

1. Unterwasser-Klemmenspannsystem, das Folgendes umfasst:
a. ein Gehäuse (20), das Folgendes umfasst:
i. einen Innenraum (21), der so bemessen ist, dass er ein dort hindurch verlaufendes Rohr (100) aufnehmen kann,
ii. ein erstes Ende (15) und
iii. ein zweites Ende (13), das dem ersten Ende gegenüber angeordnet ist,
b. eine Schelle (30), die so bemessen ist, dass sie um das Gehäuse herum passt, wobei die Schelle mehrere versetzte Kanäle (31) umfasst,
c. mehrere Spanngriffe (40), die beweglich in dem Innenraum angeordnet und so konfiguriert sind, dass sie zu dem Rohr (100) hin vorrücken und so für eine gewünschte Spannung sorgen, wobei die Spanngriffe einen Spanngriffkanal (41) definieren, wobei jeder Spanngriff einen Abschnitt des Spanngriffkanals definiert,
d. einen Satz Einstellelemente (33) entsprechend den mehreren versetzten Kanälen, wobei jedes Einstellelement Folgendes umfasst:
i. einen oberen Abschnitt (34), der so konfiguriert ist, dass eine Abmessung größer ist als bei dem versetzten Kanal, so dass der versetzte Kanal verhindert, dass sich der obere Abschnitt in den Innenraum hinein bewegt,
ii. einen mittleren Abschnitt (35), der mit dem oberen Abschnitt verbunden und so bemessen ist, dass er sich durch den versetzten Kanal in den Innenraum hinein bewegt,
iii. einen unteren Abschnitt (36), der mit dem mittleren Abschnitt verbunden ist, wobei der untere Abschnitt in den Spanngriff eingreifen kann, und
iv. eine Feder (37), die um eine vorgegebene Länge des mittleren Abschnitts herum angeordnet ist,
e. einen Unterwasser-Hydraulikmotor (10) und
f. einen Drehschrauber (50), der in einem Abschnitt des Innenraums (21) angeordnet und so bemessen ist, dass er das Rohr aufnimmt und in Eingriff nimmt, wobei der Drehschrauber (50) mit dem Unterwasser-Hydraulikmotor (10) wirkverbunden ist, wobei der Drehschrauber (50) so bemessen ist, dass das Rohr durch ihn hindurch verlaufen kann.

2. Unterwasser-Klemmenspannsystem nach Anspruch 1, das ferner einen Spanngriffanschlag (12) umfasst, der in der Nähe des zweiten Gehäuseendes (13) angeordnet ist.

3. Unterwasser-Klemmenspannsystem nach Anspruch 2, wobei der Spanngriffanschlag (12) zumindest teilweise in dem Innenraum angeordnet ist.

4. Unterwasser-Klemmenspannsystem nach Anspruch 1, wobei jeder Spanngriff (40) ferner einen im Wesentlichen trapezförmigen Spanngriff (40) umfasst.

5. Unterwasser-Klemmenspannsystem nach Anspruch 1, wobei jeder der mehreren versetzten Kanäle (31) zu einem Spanngriff (40) der mehreren Spanngriffe (40) gehört.

6. Unterwasser-Klemmenspannsystem nach Anspruch 1, das ferner ein Spanngriffgehäuse (60) umfasst, das zumindest teilweise in dem Innenraum (21) angeordnet ist, wobei jeder Spanngriff (40) an seinem dem ersten Ende (15) des Gehäuses (60) am nächsten gelegenen Ende drehbar in dem Spanngriffgehäuse (60) angebracht ist.

7. Unterwasser-Klemmenspannsystem nach Anspruch 6, wobei:
a. der Innenraum (21) ferner eine Gehäusewand (27) umfasst, die zwischen dem ersten Ende (15) und dem zweiten Ende (13) angeordnet ist, wobei die Gehäusewand eine Gehäusewandöffnung (28) umfasst, und
b. das Spanngriffgehäuse (60) ferner Folgendes umfasst:
i. ein erstes Ende (61), das so bemessen ist, dass es teilweise durch die Gehäusewandöffnung (28) passt,
ii. ein zweites Ende (62), das dem ersten Ende gegenüber angeordnet ist, wobei das zweite Ende einen Spanngriffgehäuseanschlag definiert, und
iii. eine Anschlagfeder (66), die zwischen dem Spanngriffanschlag (12) und dem Spanngriffgehäuseanschlag angeordnet ist.

8. Unterwasser-Klemmenspannsystem nach Anspruch 7, wobei der Drehschrauber (50) ferner ein Zahnrad (51) umfasst, das mit dem Unterwasser-Hydraulikmotor (10) wirkverbunden ist.

9. Unterwasser-Klemmenspannsystem nach Anspruch 8, wobei das Zahnrad ferner ein Kegelzahnrad umfasst.

10. Unterwasser-Klemmenspannsystem nach Anspruch 8, das ferner eine Dichtung (53) umfasst, die in dem Gehäuseinnenraum (21) angeordnet und verschließend mit dem Drehschrauber (50) wirkverbunden ist.

11. Unterwasser-Klemmenspannsystem nach Anspruch 1, wobei der Drehschrauber (50) ferner eine Mutter (54) umfasst, die mit dem Unterwasser-Hydraulikmotor wirkverbunden ist.

12. Unterwasser-Klemmenspannsystem nach Anspruch 11, wobei:
a. das Rohr Gewinde umfasst und
b. die Mutter (54) ferner einen genuteten Drehschrauber (50) umfasst, der so bemessen ist, dass er in jeweilige Gewinde in dem Rohr eingreift.

13. Unterwasser-Klemmenspannsystem nach Anspruch 11, wobei die Mutter (54) drehbar in dem Drehschrauber (50) angeordnet ist.

## Revendications

1. Système de tension de bride sous-marine, comprenant :
a. un logement (20) comprenant :
i. un vide intérieur (21) dimensionné pour recevoir un tube (100) à travers lui ;
ii. une première extrémité (15) ; et
iii. une seconde extrémité (13) disposée à l'opposé de la première extrémité ;
b. un collier (30) dimensionné pour s'adapter autour du logement, le collier comprenant une pluralité de canaux décalés (31) ;
c. une pluralité de pinces de tension (40) disposées de manière mobile dans le vide intérieur et configurées pour avancer contre le tube (100) afin de créer une tension souhaitée, les pinces de tension définissant un canal de pince de tension (41), chaque pince de tension définissant une partie du canal de pince de tension ;
d. un ensemble d'ajusteurs (33) correspondant à la pluralité de canaux décalés, chaque ajusteur comprenant :
i. une partie supérieure (34) configurée pour être plus grande dans une dimension que le canal décalé de telle sorte que le canal décalé empêche le déplacement de la partie supérieure dans le vide intérieur ;
ii. une partie centrale (35) connectée à la partie supérieure et dimensionnée pour se déplacer à travers le canal décalé jusque dans le vide intérieur ;
iii. une partie inférieure (36) connectée à la partie centrale, la partie inférieure pouvant être mise en prise avec la pince de tension ; et
iv. un ressort (37) disposé autour d'une longueur prédéterminée de la partie centrale ;
e. un moteur hydraulique sous-marin (10) ; et
f. une coulisse d'écrou (50) disposée dans une partie du vide intérieur (21) et dimensionnée pour accepter et se mettre en prise avec le tube, la coulisse d'écrou (50) fonctionnant en communication avec le moteur hydraulique sous-marin (10), la coulisse d'écrou (50) étant dimensionnée pour accepter le tube à travers elle.

2. Système de tension de bride sous-marine selon la revendication 1, comprenant en outre une butée de prise de tension (12), disposée à proximité de la seconde extrémité du logement (13).

3. Système de tension de bride sous-marine selon la revendication 2, dans lequel la butée de poignée de tension (12) est disposée au moins partiellement dans le vide intérieur.

4. Système de tension de bride sous-marine selon la revendication 1, dans lequel chaque pince de tension (40) comprend en outre une pince de tension (40) de forme sensiblement trapézoïdale.

5. Système de tension de bride sous-marine selon la revendication 1, dans lequel chacun de la pluralité de canaux décalés (31) est associé à une pince de tension (40) de la pluralité de pinces de tension (40).

6. Système de tension de bride sous-marine selon la revendication 1, comprenant en outre un logement de pince de tension (60) disposé au moins partiellement dans le vide intérieur (21), chaque pince de tension (40) étant montée de manière pivotante à l'intérieur du logement de pince de tension (60) au niveau d'une extrémité de la pince de tension la plus proche de la première extrémité (15) du logement (60).

7. Système de tension de bride sous-marine selon la revendication 6, dans lequel :
a. le vide intérieur (21) comprend en outre une paroi de logement (27) disposée entre la première extrémité (15) et la seconde extrémité (13), la paroi de logement comprenant un orifice de paroi de logement (28) ; et
b. le logement de pince de tension (60) comprend en outre :
i. une première extrémité (61) dimensionnée pour s'adapter partiellement à travers l'orifice (28) de la paroi de logement ;
ii. une seconde extrémité (62) disposée à l'opposé de la première extrémité, la seconde extrémité définissant une butée de logement de pince de tension ; et
iii. un ressort de butée (66) disposé entre la butée de pince de tension (12) et la butée de logement de pince de tension.

8. Système de tension de bride sous-marine selon la revendication 7, dans lequel la coulisse d'écrou (50) comprend en outre un engrenage (51) fonctionnant en communication avec le moteur hydraulique sous-marin (10).

9. Système de tension de bride sous-marine selon la revendication 8, dans lequel l'engrenage comprend en outre un engrenage conique.

10. Système de tension de bride sous-marine selon la revendication 8, comprenant en outre un joint (53) disposé à l'intérieur du vide intérieur (21) du logement et en communication occlusive avec la coulisse d'écrou (50).

11. Système de tension de bride sous-marine selon la revendication 1, dans lequel la coulisse d'écrou (50) comprend en outre un écrou (54) connecté fonctionnellement au moteur hydraulique sous-marin.

12. Système de tension de bride sous-marine selon la revendication 11, dans lequel :
a. le tube comprend des filets ; et
b. l'écrou (54) comprend en outre une coulisse d'écrou rainurée (50) dimensionnée pour s'enclencher de manière coopérative avec les filets correspondants dans le tube.

13. Système de tension de bride sous-marine selon la revendication 11, dans lequel l'écrou (54) est disposé en rotation à l'intérieur de la coulisse d'écrou (50).
